# EUROPÄISCHE PATENTANMELDUNG

(11) **EP 0 718 177 A1**
(43) Veröffentlichungstag der Anmeldung: **26.06.1996**
(21) Anmeldenummer: 95120095.5
(22) Anmeldetag: 19.12.1995
(51) Int. Cl.: B62D 49/06

(54) **Schlepperfahrzeug**

(30) Priorität: 22.12.1994 DE 4445832
(71) Anmelder: Horsch Maschinen GmbH, D-92421 Schwandorf (DE)
(72) Erfinder: Horsch, Michael, D-92421 Schwandorf (DE)
(74) Vertreter: Wasmeier, Alfons, Dipl.-Ing.

(57) **Zusammenfassung**

Ein Vierradschlepper mit Allradantrieb, der wahlweise mit Breitreifen oder mit Pflegereifen betrieben wird und dessen Gesamtbreite maximal 3 m beträgt, ist gekennzeichnet durch einen Rahmen mit einer maximalen Breite von ca. 900 mm im Bereich der Hinterräder sowie einer maximalen Breite von ca. 600 mm im Bereich der Vorderräder, einen Abstand zwischen Vorder- und Hinterradachse von mindestens 3 m, der Anordnung des Motors etwa über der Vorderradachse und der Fahrerkabine hinter den Vorderrädern, einen Durchmesser der Hinterräder von mindestens 1,65 m und maximal 2,0 m, ein Verhältnis der Raddurchmesser von Vorderrädern zu Hinterrädern von 1 : 1,2 bis 1 : 1,25 bei einem Hinterraddurchmesser von 2,0 m für Pflegereifen, einen Radeinschlagwinkel von ca. 35°, einen Abstand von Radmitte zu Radmitte bei Pflegereifen von ca. 1,8 bis 2,3 m sowie einen Innenabstand der Breitreifen von ca. 0,9 m bei einer Rahmenbreite von ca. 0,8 m und einer Fahrgeschwindigkeit von über 40 km/h.

## Beschreibung

Die Erfindung betrifft einen Allradschlepper nach dem Oberbegriff des Anspruches 1.

Derartige vierrädrige Schlepperfahrzeuge mit Allradantrieb sind beispielsweise in Form des MB-Trac bekannt. Solche Fahrzeuge weisen vier gleichgroße Räder mit Zwangsantrieb auf,
wobei alle vier Räder einen vollständigen Gleichlauf besitzen. Der Abstand zwischen Vorderachse und Hinterachse ist extrem kurz, damit ein möglichst kompaktes Fahrzeug erreicht wird. Das Fahrerhaus ist zwischen Vorder- und Hinterachse angeordnet und aufgrund der extremen Kürze des Fahrzeuges ist die Ladefläche hinter dem Fahrerhaus sehr kurz und deshalb nur zur Aufnahme bestimmter Lasten geeignet. Der U-Profilrahmen mit Querträgern hat eine relativ große Breite, so daß der Einsatz von Breitreifen die Gesamtfahrzeugbreite, die für Straßenfahrt zulässig ist, nämlich 3 Meter überschritten würde.

Des weiteren ist ein Vierradschlepper vom Typ Terra-Gator bekannt, der mit Vorderrädern mit kleinerem und Hinterrädern mit größerem Durchmesser ausgeführt ist, und bei dem der Abstand zwischen der Vorderachse und der Hinterachse erheblich größer als bei dem MB-Trac ist. Der Antriebsmotor ist weitgehend über der Vorderachse und das Fahrerhaus unmittelbar hinter dem Antriebsmotor angeordnet, so daß eine hinter dem Fahrerhaus liegende größere Ladefläche erreicht wird. Die Baulänge dieses Fahrzeuges zwischen dem vorderen Abschluß und der Rückseite des Fahrerhauses ist hierbei relativ groß gewählt, so daß das Fahrzeug nicht kompakt genug gebaut ist. Des weiteren ist ein Auswechseln von Breitreifen gegen Pflegereifen vorne weder vorgesehen noch möglich, weil der größere Druchmesser der Pflegereifen im Vergleich zu den Breitreifen aufgrund der baulichen Ausgestaltung nicht untergebracht werden kann.

Schließlich wird von der Anmelderin selbst ein Vierradschlepper gebaut (Horsch PT 150), der wahlweise mit Breitreifen und mit Pflegereifen betrieben wird, bei dem der Rahmen so ausgelegt ist, daß auch bei einer Bestückung mit Breitreifen die maximal zulässige Breite von 3 Metern nicht überschritten wird, und bei dem der Motor, wie auch bei anderen Fahrzeugen, über der Vorderachse angeordnet ist, das Fahrerhaus sich jedoch vor den Vorderrädern befindet. Die Raddurchmesser der Vorderräder und der Hinterräder sind hierbei gleichgroß gewählt.

Aufgabe der Erfindung ist es, einen Vierrad-Schlepper anzugeben, der folgende Eingenschaften hat:
Einen möglichst kleinen Wendekreis,
Wechselräder, damit der Schlepper von Breit- auf Pflegereifen und umgekehrt umgerüstet werden kann, wobei Vorder- und Hinterachse für beide Radtypen beibehalten werden,
Straßentauglichkeit,
optimale Lastverteilung von Kabine, Motor und Nutzlast,
kompakte Bauweise,
einfaches und optimales Wechseln der unterschiedlich großen Vorder- und Hinterreifen,
Radeinschlagwinkel bis etwa 35°.

Gemäß der Erfindung wird dies mit einem gattungsgemäßen Allradschlepper erreicht, der aufweist
a) einen Rahmen mit einer maximalen Breite von 900 mm im hinteren Bereich sowie im Bereich der Vorderräder mit einer maximalen Breite von ca. 600 mm,
b) einen Abstand zwischen Vorder- und Hinterachse von mindestens 3 m,
c) Motor über der Vorderradachse, Fahrerkabine hinter den Vorderrädern,
d) einen Durchmesser der Hinterräder von min 1,65 m und max 2,0 m,
e) ein Verhältnis der Raddurchmesser von Vorderrädern zu Hinterrädern von 1:1,2 bis 1:1,25 bei einem Hinterraddurchmesser von 2,0 m für Pflegereifen,
f) einen Radeinschlagwinkel von ca. 35°,
g) einen Abstand von Radmitte zu Radmitte bei Pflegereifen von ca 1,8 bis 2,3 m sowie einen Innenabstand der Breitreifen von ca 0,9 m bei einer Rahmenbreite von ca 0,8 m und
h) eine Fahrgeschwindigkeit von über 40 kmh.

Das mit der Erfindung zu lösende Problem besteht darin, ein Schlepperfahrzeug zu konstruieren, das für den Pflegebetrieb wie auch für den Normalbetrieb des Schleppers optimal eingesetzt werden kann. Beim Pflegebetrieb, bei dem in den Bestand gefahren werden muß, ist entscheidend, daß der Raddurchmesser möglichst groß ist, damit eine hohe Bodenfreiheit zur Schonung des Bestandes erzielt wird. Dies hat für den Bereich der Vorderachse den Nachteil, daß einerseits die Konstruktion vorne entsprechend ungünstig hoch gewählt werden muß, und andererseits der Einschlagwinkel der Vorderräder bei vorgegebener Fahrzeuggesamtbreite und der notwendigen Breite des Rahmens des Schleppers sehr begrenzt ist, so daß ein großer Wendekreis des Fahrzeugs in Kauf genommen werden muß, was einen entscheidenden Nachteil darstellt und in vielen Fällen den praktischen Einsatz des Schleppers unmöglich macht. Bei einem Einsatz des Fahrzeugs mit Breitreifen vorne und hinten muß es - da bei unterschiedlichen Einsatzarten lediglich die Räder ausgetauscht werden - entsprechend möglich sein, trotz der vorderen Breitreifen und trotz des großen Durchmessers der Vorderräder den Einschlagwinkel zur Erzielung eines kleineren Wenderadius beizubehalten. Hierzu ist es einerseits erforderlich, eine optimale Untersetzung des Verhältnisses der Durchmesser der Hinterreifen zu den Vorderreifen (bei größtmöglichem Durchmesser der Hinterräder) zu wählen, andererseits den Rahmen im Bereich der Vorderräder möglichst schmal zu halten, damit der für die Wendigkeit des Fahrzeugs benötigte kleine Einschlagwinkel erreicht werden kann. Gleichzeitig kann nur mit einem möglichst großen Durchmesser der Breitreifen eine möglichst große Bodenkontakt-fläche und damit ein möglichst geringer Bodendruck erreicht werden.

Mit dem erfindungsgemäßen Fahrzeug werden folgende Ziele und Vorteile erreicht:
Aufgrund des extrem schmalen Rahmens im vorderen Bereich des Fahrzeuges können auch bei Verwendung von Pflegereifen großen Durchmessers die beiden Vorderräder bis 35° eingeschlagen werden, so daß das Fahrzeug einen sehr kleinen Wendekreis fahren kann und außergewöhnlich gute Manövriereigenschaften erhält.

Durch Anordnung des Motors über der Vorderradachse und unmittelbar dahinter des Fahrerhauses ergibt sich eine extrem kompakte Bauweise des vorderen Fahrzeugteiles. Aufgrund des extrem großen Durchmessers der Hinterräder wie auch der Vorderräder, aufgrund der unterschiedlichen Reifendurchmesser an der Vorder- und an der Hinterachse, und aufgrund der Austauschbarkeit der Breitreifen gegen Pflegereifen und umgekehrt wird ein optimaler Einsatz des Schleppers sowohl im Pflegebereich in hohen Beständen als auch auf druckempfindlichen, nassen Böden ermöglicht. Dabei ist das Verhältnis zwischen Durchmesser der Vorderreifen und Durchmesser der Hinterreifen von 1,2 bis 1,25 von entscheidender Bedeutung für die Wahl möglichst großer Reifendurchmesser für die Pflegereifen, damit ein optimaler Wendekreis erzielt werden kann.

Nachstehend wird die Erfindung in Verbindung mit der Zeichnung anhand eines Ausführungsbeispieles erläutert. Es zeigt:
Fig. 1 eine schematische Seitenansicht des Fahrzeuges nach der Erfindung,
Fig. 2 eine schematische Darstellung des Fahrzeuges von oben, mit Breitreifen, und
Fig. 3 eine schematische Darstellung des Fahrzeuges von oben, mit Pflegereifen.

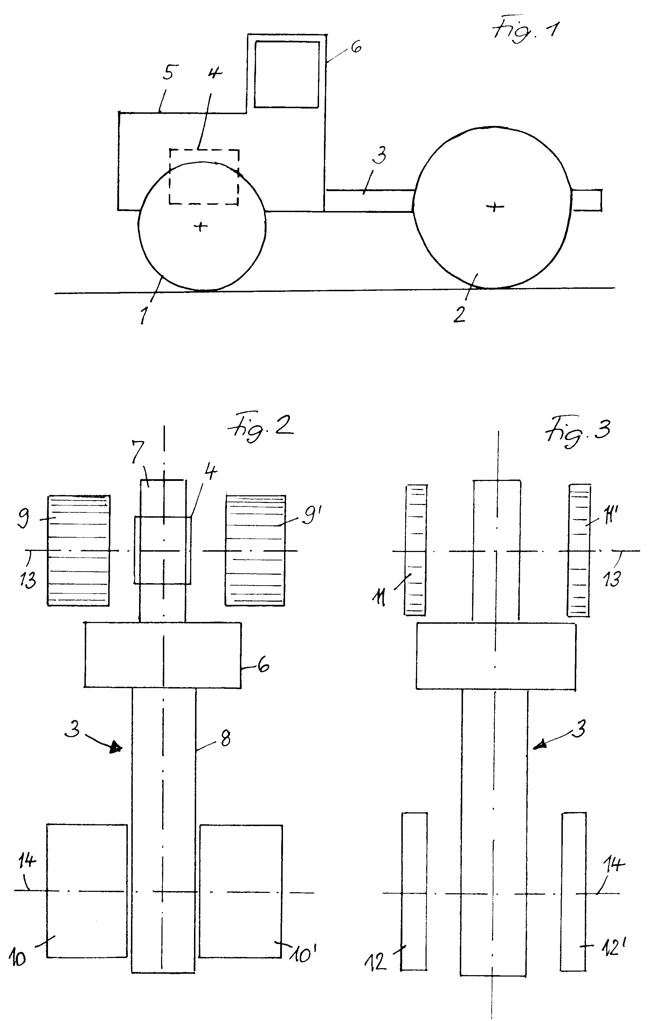

Der in Fig. 1 schematisch dargestellte Schlepper weist zwei Vorderräder 1, 1' entweder in Form von Breitreifen oder von Pflegereifen sowie zwei Hinterräder 2, 2' entweder in Form von Breitreifen oder Pflegereifen auf, deren Durchmesser ein Verhältnis von 1 : 1,2 bis 1 : 2,5 beträgt und deren Durchmesser für einen speziellen Fall entsprechend dem maximalen Durchmesser bei Pflegereifen von 1 948 mm an den Hinterreifen mißt, während die entsprechenden, dagegen austauschbaren Hinterrad-Breitreifen einen Durchmesser von 1.650 mm besitzen. Der Durchmesser der Vorderradreifen beträgt bei Verwendung von Pflegereifen 1 605 mm, bei Verwendung von Breitreifen 1 400 mm. Der Schlepper weist einen extrem schmalen Rahmen 3 auf, dessen maximale Breite im Bereich der Hinterräder ca. 900 mm und dessen maximale Breite im Bereich der Vorderräder ca. 600 mm beträgt. Über der Vorderachse ist der Antriebsmotor 4 angeordnet. Das Chassis 5 des Schleppers ist über den Vorderrädern 1, 1' so angeordnet, daß das Fahrerhaus 6 hinter den Vorderrädern liegt. Der Rahmen 3 weist einen vorderen Rahmenteil 7 und einen hinteren Rahmenteil 8 auf. In Fig. 2 sind die Vorderräder 9, 9' sowie die Hinterräder 10, 10' als Breitreifen ausgebildet, in Fig. 3 sind die Vorderräder 11, 11' und die Hinterräder 12, 12' jeweils Pflegereifen.

Bei einer speziellen Ausführungsform der Erfindung haben die Breitreifen 10, 10' einen Durchmesser von 1.650 mm und eine Breite von 1.050 mm, während die Breitreifen 9, 9' (Vorderreifen) einen Durchmesser von 1.400 mm und eine Breite von 750 mm besitzen. Die Vorderreifen 9, 9' und die Hinterreifen 10, 10' sind auf ihrer jeweiligen Außenseite bündig verlaufend.

Die Hinterräder 12, 12' in Form der Pflegereifen haben im speziellen Fall einen Durchmesser von 1.948 mm und eine Breite von 305 mm, während die Vorderreifen 11, 11' als Pflegereifen einen Durchmesser von 1.605 mm und eine Breite von 282 mm besitzen; auch hier sind die Außenseiten der Vorder- und Hinterräder vorzugsweise jeweils bündig angeordnet. Der Mittenabstand der beiden Hinterräder bzw. Vorderräder beträgt zwischen 1,8 und 2,3 m, und ist veränderbar, um eine Anpassung an die Abstände von Pflanzreihen vornehmen zu können.

Im Falle der Fig. 2 und der Verwendung von Breitreifen beträgt der Abstand der Breitreifen 10, 10' voneinander von Außenseite zu Außenseite 3 m, ein Maß, das für die Straßenfahrt nicht überschritten werden darf.

In Fig. 3 ist ein Einschlagwinkel α mit dem Vorderrad 11' dargestellt. Dieser Winkel ist der maximale Einschlagwinkel von ca. 35°, der dem Fahrzeug ermöglicht, einen kleinen Wendekreis zu fahren. Vorzugsweise ist die Hinterachse lenkbar und wahlweise gefedert ausgebildet.

## Patentansprüche

1. Vierrädriger Schlepper mit Allradantrieb, der wahlweise mit Breitreifen oder mit Pflegereifen betrieben wird und dessen Gesamtbreite maximal 3 m beträgt, gekennzeichnet durch die Kombination folgender Merkmale
a) Rahmen mit einer maximalen Breite von ca 900 mm im Bereich der Hinterräder sowie einer maximalen Breite von ca. 600 mm im Bereich der Vorderräder,
b) Abstand zwischen Vorder- und Hinterachse von mindestens 3 m,
c) Motor etwa über der Vorderachse, Fahrerkabine hinter den Vorderrädern,
d) Durchmesser der Hinterräder von min. 1,65 m und max. 2,0 m,
e) Verhältnis der Raddurchmesser von Vorderrädern zu Hinterrädern von 1:1,2 bis 1:1,25 bei einem Hinterraddurchmesser von 2,0 m für Pflegereifen,
f) Radeinschlagwinkel von ca. 35°,
g) Abstand von Radmitte zu Radmitte bei Pflegereifen von ca.1,8 bis 2,3 m sowie Innen-abstand der Breitreifen von ca.0,9 m bei einer Rahmenbreite von ca.0,8 m und
h) Fahrgeschwindigkeit von über 40 kmh.

2. Schlepper nach Anspruch 1, dadurch gekennzeichnet, daß die Vorderrad-Breitreifen einen Durchmesser von 1.400 mm und eine Breite von 750 mm, und die Hinterrad-Breitreifen einen Durchmesser von 1.650 mm und eine Breite von 1.050 mm haben, und daß die Außenseiten der linken und der rechten Vorder- und Hinterreifen bündig miteinander angeordnet sind.

3. Schlepper nach Anspruch 1, dadurch gekennzeichnet, daß die Vorderrad-Pflegereifen einen Durchmesser von 1.650 mm und eine Breite von 282 mm, und die Hinterrad-Pflegereifen einen Durchmesser von 1.940 mm und eine Breite von 305 mm haben, und daß die linken und die rechten Vorder- und Hinterreifen miteinander fluchtend angeordnet sind.
